# FASCICULE DE BREVET EUROPEEN

(11) **EP 1 577 454 B1**
(45) Date de publication et mention de la délivrance du brevet: **27.02.2013**
(21) Numéro de dépôt: 05005789.2
(22) Date de dépôt: 17.03.2005
(51) Int. Cl.: E04B 1/88, B32B 9/02

(54) **Module d'isolation et d'étanchéité**
Isolierte und wasserdichte Baueinheit
Insulated and sealed module

(30) Priorité: 19.03.2004 FR 0402836
(43) Date de publication de la demande: 21.09.2005
(73) Titulaire: VALTECH Industrie, 13115 Saint Paul Lez Durance (FR)
(72) Inventeur: Valois, Eric, 84120 Pertuis (FR)
(74) Mandataire: Renaud-Goud, Thierry

(56) Documents cités:
- WO-A-00/17460
- FR-A- 2 792 668

## Description

La présente invention concerne un module d'isolation et d'étanchéité.

Le domaine de l'invention est celui des modules de revêtement destinés à l'isolation des bâtiments au niveau des planchers, des toitures, des parois, des murs, des combles et des plafonds.

Un tel module de revêtement doit généralement être rendu étanche. Ainsi, le document FR 2 809 128 A enseigne un dispositif pour la fixation d'un revêtement sur une toiture. Ce revêtement comprend des moyens d'isolation, à savoir un panneau isolant thermique, assemblés par collage à des moyens d'étanchéité, à savoir un bitume élastomère.

Un panneau est un élément rigide si bien qu'un tel revêtement présente de grandes difficultés pour ce qui concerne son stockage et sa manutention.

Par ailleurs, cohabitent deux grandes familles de matériaux souples isolants pour bâtiments.

Premièrement, les matériaux isolants épais, de plus de 10 cm d'épaisseur, comprennent une nappe épaisse et dense, éventuellement un film extérieur et éventuellement un film intérieur. Le film extérieur de couverture est réalisé en polyester ou en polypropylène. La nappe épaisse constituant une épaisseur isolante est constituée d'une matière fibreuse minérale telle que la laine de verre ou la laine de roche. Le film intérieur de protection est réalisé également en papier « Kraft » ou en polypropylène. Il a un rôle de pare-vapeur. Les deux films assurent en outre la protection mécanique de la nappe.

Deuxièmement, les matériaux isolants minces, de moins de 10 cm d'épaisseur, comprennent un film extérieur métallisé recouvrant une structure sandwich dans laquelle s'intercalent des films souples métallisés et des nappes souples en matériau isolant. On pourra se référer notamment aux documents WO 00/17460 et FR 2 792 668. Les films souples présentent des propriétés réflectives utilisées pour limiter les transferts thermiques par rayonnement. Les nappes souples sont réalisées en un matériau synthétique tel une ouate synthétique, une mousse alvéolaire, ou un matériau à bulles constitué d'une ou plusieurs couches de poches fermées contenant de l'air ou un gaz quelconque. Les isolants minces sont généralement assemblés par soudage si bien qu'ils présentent des points de compression au droit des points de soudure. Au niveau des points de compression, l'épaisseur de l'isolant est sensiblement réduite, ce qui entraîne une forte dégradation des performances d'isolation.

En tout état de cause, ces matériaux isolants doivent être protégés des infiltrations et ruissellements d'eau par un matériau d'étanchéité tel qu'un écran.

L'étanchéité d'une toiture est obligatoirement mise en oeuvre par l'extérieur. Le matériau isolant est posé avant l'écran d'étanchéité de sorte que celui-ci soit en regard de la couverture. Il en va de même pour une façade ventilée d'une maison à ossature bois par exemple.

De tels matériaux d'étanchéité ne sont pas sans entraîner un certain nombre d'inconvénients.

En premier lieu et comme évoqué ci-dessus, il convient de procéder à la pose successive d'un matériau d'isolation, et d'un matériau d'étanchéité. Cette double pose grève les temps de main d'oeuvre dans un secteur où elle est rare, augmente les procédures de sécurité et obère les prix et les procédures d'approvisionnement. Elle nécessite un double ancrage non destructif des deux matériaux sur un même support.

En second lieu, la juxtaposition des panneaux ou des laizes ne peut actuellement se faire de façon satisfaisante.

S'ils sont disposés en chevauchement, outre les pertes de matière du fait du débord d'un panneau sur le panneau adjacent, ils présentent une irrégularité de surface néfaste au matériau d'étanchéité ainsi qu'au panneau d'habillage éventuel.

S'ils sont apposés latéralement, la frontière commune à deux panneaux juxtaposés tend à s'ouvrir au cours du temps et les fuites thermiques, acoustiques ou d'eau tendent à croître. Si la rangée de clous ou d'agrafes de fixation est disposée en bordure de chaque panneau, cela crée des déformations locales et augmente l'ouverture sur cette frontière commune. Si cette rangée est relativement éloignée de la frontière commune, les deux panneaux ne sont pas maintenus à ce niveau, ce qui n'est pas plus favorable.

L'invention se propose d'apporter une amélioration à cette situation.

Selon l'invention, un module de revêtement d'une paroi comprend des moyens d'isolation assemblés à des moyens d'étanchéité ; de plus, ces moyens d'isolation consistent en un complexe d'isolation composé d'une alternance de nappes et de films, ce complexe étant dépourvu de points de compression.

La jonction de deux modules adjacents peut ainsi être réalisée à l'aide des moyens d'étanchéité.

Avantageusement, les moyens d'étanchéité consistent en un écran composé d'au moins une couche de matériau non tissé métallisé.

Ce matériau non tissé peut être du polyéthylène, du polyester ou du polypropylène, l'écran pouvant comporter jusqu'à trois couches.

De plus, cet écran présente une résistance à la pénétration de l'eau supérieure à 1 000 mm et inférieure à 3000 mm.
En outre, l'écran possède au moins une des caractéristiques suivantes :
- coefficient de perméabilité à la vapeur d'eau inférieur à 6 000 g/m²/24h,
- résistance à la déchirure au clou supérieure à 50 Newtons,
- réflexion de l'énergie comprise entre 50 et 75 %.

Suivant un mode de réalisation privilégié, les moyens d'isolation et d'étanchéité sont assemblés par collage.

Le collage se présente préférentiellement sous forme de cordons de colle parallèles.

De plus, l'écran présente un débord par rapport à au moins un bord des moyens d'isolation.

En outre, les cordons de colle présentent un retrait par rapport à au moins un bord des moyens d'isolation, la longueur de ce retrait étant supérieure ou égale à celle du débord.

La présente invention apparaîtra maintenant avec plus de détails dans le cadre de la description qui suit d'un exemple de réalisation donné à titre illustratif en se référant au dessin joint, dans lequel :
- la figure 1 est un schéma en coupe d'un mode de réalisation du complexe d'isolation, et
- la figure 2 est un schéma en perspective d'un module de revêtement.

Les éléments présents dans les deux figures sont affectés d'une seule et même référence.

Le module de revêtement MIE, ultérieurement désigné comme le module, comprend essentiellement des moyens d'isolation et des moyens d'étanchéité.

Les moyens d'isolation, un matériau isolant mince dans le cas présent, font partie de l'état de l'art. Toutefois, il est préférable qu'ils soient dépourvus de points de compression, ce qui signifie qu'ils sont assemblés par couture ou par collage.

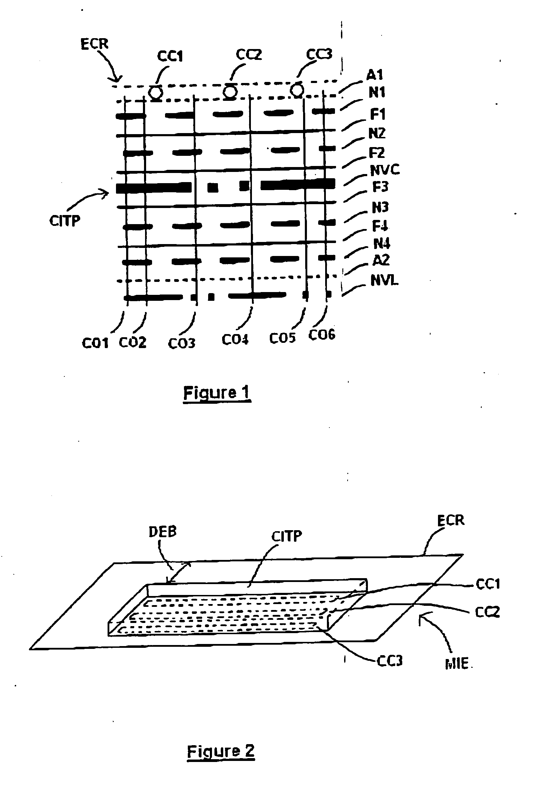

En référence à la figure 1, selon un mode de réalisation préférentiel, ces moyens d'isolation consistent en un complexe d'isolation thermique et phonique CITP. Ce complexe est composé de 12 éléments disposés en empilement.

Premièrement, un film armé A1, extérieur, métallisé, réfléchit l'énergie et résiste à la déchirure. Il est constitué de polyester métallisé, armé d'une grille et enduit de polyéthylène.

Deuxièmement, une nappe d'ouate N1, qui est isolante matérialise une lame d'air entre deux films métallisés. Elle est constituée de polyester d'une masse surfacique comprise entre 40 et 150 g/m².

Troisièmement, un premier film intermédiaire F1, réfléchit l'énergie thermique rayonnée. Il est constitué de polypropylène métallisé.

Quatrièmement, une deuxième nappe d'ouate N2 suit le premier film intermédiaire F1.

Cinquièmement, un deuxième film intermédiaire F2 suit la deuxième nappe d'ouate N2.

Sixièmement, une nappe végétale de coton NVC, également disposée entre 2 films intermédiaires renforce l'atténuation acoustique du complexe de par sa densité. Elle est constituée de coton dense, aiguilleté, thermo-lié, nappé ou tricoté. Sa masse surfacique est comprise entre 50 g/m² et 600 g/m². Par sa densité, elle favorise l'affaiblissement des nuisances sonores.Son indice d'affaiblissement acoustique Rw est compris entre 20 et 38 dB dans le cas d'une association avec une couverture comprenant des éléments en terre cuite. D'autre part, son coefficient d'isolation thermique est inférieur à 0,05 W/m.°C.

Le terme aiguilleté concerne des nappes de fibres non-tissées entremêlées par l'action d'aiguilles à barbes. Il désigne le procédé de fabrication de feutres et textiles non-tissés, consistant à faire passer des touffes de fibre dans une trame grossière, avec des aiguilles à crochet, et à provoquer ainsi leur enchevêtrement.

Le terme thermolié désigne le procédé de fabrication de feutres et textiles non-tissés, consistant à mélanger une fibre thermofusible aux fibres d'origines synthétiques ou naturelles, avant de les passer au four afin de les lier entre elles.

Suivent un troisième film intermédiaire F3, une troisième nappe d'ouate N3, un quatrième film intermédiaire F4, une quatrième nappe d'ouate N4 et un deuxième film armé F2.

Finalement, une nappe végétale de lin NVL possède un pouvoir naturel d'hygrorégulation, et des propriétés d'isolation thermique, doté d'une certaine inertie en surface. Elle est constituée de lin aiguilleté, thermo-lié, nappé ou tricoté, et présentant une masse surfacique comprise entre 50 g/m² et 600 g/m². Cette nappe présente une capacité hygrorégulatrice lui permettant d'absorber une quantité de vapeur d'eau au moins égale à son poids à l'état sec sans voir sa conductivité thermique augmenter dans les mêmes proportions, contrairement aux fibres minérales.

Il est possible de procéder à l'assemblage des douze couches du complexe CITP par couture ou par collage. Dans les deux cas on évite ainsi les problèmes générés par la présence de zones de compression engendrés lors d'une opération de soudure telle celle précédemment décrite. Par conséquent on évite la formation d'un pont thermique et/ou acoustique, voir hydrique, oeuvrant à l'encontre de l'invention.

Pour assembler le complexe CITP, une couture par points est réalisée à raison d'au moins 6 coutures sur la longueur de la laize, dont deux coutures latérales CO1, CO6 rapprochées à 20mm du bord du complexe CITP, et au moins 4 coutures centrales CO2, CO3, CO4, CO5. Un espace de 1 à 20 mm sépare deux points de couture consécutifs.

Il est également possible de coller le complexe CITP en disposant la colle de façon appropriée sur chaque interface film/nappe.

La nappe végétale de lin NVL aux propriétés hygrorégulatrices naturelles est disposée sur une des deux faces apparentes du complexe CITP. Cette nappe fonctionne comme un échangeur de vapeur d'eau. Lors d'une période de forte humidité, la nappe emmagasine la vapeur d'eau dans et autour de ses fibres et, lors d'une période sèche, la nappe restitue la vapeur d'eau emmagasinée.

La conductivité thermique des fibres végétales généralement notée λ varie selon plusieurs critères :
- conditions climatiques lors de la récolte,
- mode de conservation et de dessiccation,
- mode d'assemblage par thermoliage, nappage, aiguilletage, tricotage,
- pourcentage d'association à d'autres matériaux liants tels la colle, l'ouate de polyester, d'autres fibres végétales ou naturelles,
- densité du matelas de fibres,
- conditions climatiques présentes.

Les coefficients suivants ont été observés, les plus faibles étant les plus intéressants :
chanvre 0,039, lin 0,037, coton 0,040, mouton 0,035 à 0,045, coco 0,047 à 0,050, liège expansé 0,032 à 0,045, roseaux 0,056 W/m.°C.

Il est en effet possible qu'une nappe soit constituée majoritairement de fibres végétales telles le lin, le chanvre, le coton, la noix de coco, l'agave, le sisal, le café, le bambou, la canne, le kapok, le roseau, le papyrus, le chêne liège, le jute, ceci non limitativement.

Il est également possible qu'une nappe soit constituée majoritairement de fibres animales, telles les systèmes pileux des ovins, caprins, camélidés, rongeurs, non limitativement.

Généralement, les nappes intègrent aussi un faible pourcentage de fibres non naturelles qui servent de liant.

Il est également possible qu'au moins une nappe soit constituée d'un mélange intégrant des fibres animales et végétales, en partie ou en totalité.

Les nappes susmentionnées en fibre végétale ou animale peuvent coexister avec des nappes en fibre synthétique, telle l'ouate de polyester constituant les nappes d'ouate N1, N2, N3, N4 du complexe CITP. Elles peuvent également coexister avec des nappes traditionnelles en laine de verre ou en laine de roche.

Dans le cas général, il est préférable que les deux faces du complexe soient en contact avec une lame d'air. La lame d'air intérieure est non ventilée, contrairement à la lame d'air extérieure. Il convient de ne pas comprimer le produit lors de la pose.

Toutefois, dans le cas d'une isolation sur volige ou plancher, il convient de placer le complexe directement sur le support sans ménager de lame d'air intérieure.

La face intérieure, comportant la nappe de fibre végétale, par exemple du lin, doit être protégée des risques de dégradation dans les parties habitables du bâtiment, par une paroi telle qu'une plaque de plâtre ou de lambris conformément aux règles de l'art.

Comme représenté également sur la figure 2, les moyens d'étanchéité consistent en un écran ECR qui est superposé au complexe CITP précédemment décrit. L'assemblage est réalisé par collage.

A cet effet, les laizes du complexe CIPT sont entraînées par un tapis roulant sur une table de positionnement pourvue d'une série d'au moins trois têtes d'encollage. Ces têtes surplombent légèrement les laizes et émettent un flux de colle en permanence sur le complexe CIPT en mouvement. Ce dernier se retrouve ainsi porteur de cordons de colle parallèles disposés en fonction de l'agencement des têtes d'encollage. L'écran ECR est ensuite plaqué en pression sur les cordons de colle COL1, COL2, COL3. Le collage se fait généralement par fibérisation d'un hotmelt avec une colle restant souple, par au moins 3 bandes de 50 à 100 mm de large, dans le sens de la longueur. L'emplacement des bandes de colle est décalé par rapport à celui des coutures de complexe CPIT.

Le terme hotmelt désigne une colle thermofuslble, qui fond à la chaleur.

Le terme fibérisation concerne une dépose de colle sans contact par projection sous formes spiralées, et provient du nom d'une marque déposée par le fabricant d'une machine à coller.

Cette colle dite hotmelt a un fort pouvoir de collage-décollage dit « TACK », et reste souple dans le temps.

La colle mise en oeuvre est dite à tack permanent : en effet, le collage présente une forte adhésion initiale, et conserve sa caractéristique puissante dans le temps.

L'écran ECR est généralement réalisé sous forme d'un bicouche ou d'un tricouche en polypropylène. Sa masse surfacique est de 95 g/m² et son coefficient de perméabilité à la vapeur d'eau inférieur à 6 000 g/m²/24h.

De plus, l'écran ECR peut présenter les caractéristiques suivantes ;
- résistance à la pénétration de l'eau supérieure à 1 000 mm et inférieure à 3000 mm au sens de la norme ISO 811,
- coefficient de réflexion compris entre 50 et 75 %,
- résistance à la déchirure au clou supérieure à 50 Newtons au sens de la norme MOAT 27.5.4.1.

De préférence, l'écran ECR déborde du complexe CITP sur au moins un coté, préférentiellement sur une longueur. L'écran n'est pas collé en bordure du coté opposé, qui s'avère être le coté en vis-à-vis de la laize adjacente. De ce fait il est possible, après la pose d'une première laize, de soulever latéralement son écran ECR. On peut alors disposer le débord DEB de l'écran d'une deuxième laize entre le complexe CIPT et l'écran ECR de la première laize. Ensuite, on peut procéder à un collage ou à un adhésivage de la partie débordante du deuxième écran ECR sur les surfaces en regard du complexe CIPT et de l'écran ECR de la première laize. Il s'ensuit que les complexes des deux laizes sont maintenus bord à bord.

L'opération peut se répéter latéralement, ainsi que dans un sens montant ou descendant.

L'exemple de réalisation de l'invention présenté ci-dessus a été choisi eu égard à son caractère concret. Il ne serait cependant pas possible de répertorier de manière exhaustive tous les modes de réalisation que recouvre cette invention. En particulier, tout moyen décrit peut être remplacé par un moyen équivalent sans sortir du cadre de la présente invention.

## Revendications

1. Module (MIE) de revêtement d'une paroi comprenant des moyens d'isolation (CITP) assemblés à des moyens d'étanchéité (ECR), **caractérisé en ce que** lesdits moyens d'isolation (CITP) consistent en un complexe d'isolation composé d'une alternance de nappes et de films, ce complexe étant dépourvu de points de compression.

2. Module selon la revendication 1, **caractérisé en ce que** lesdits moyens d'étanchéité (ECR) consistent en un écran composé d'au moins une couche de matériau non tissé métallisé.

3. Module selon la revendication 2, **caractérisé en ce que** ledit matériau non tissé est du polyéthylène.

4. Module selon la revendication 2, **caractérisé en ce que** ledit matériau non tissé est du polyester.

5. Module selon la revendication 2, **caractérisé en ce que** ledit matériau non tissé est du polypropylène et **en ce que** ledit écran (ECR) comporte au moins deux couches.

6. Module selon l'une quelconque des revendications 2 à 5, **caractérisé en ce que** ledit écran (ECR) présente une résistance à la pénétration de l'eau supérieure à 1 000 mm et inférieure à 3000 mm.

7. Module selon l'une quelconque des revendications 2 à 6, **caractérisé en ce que** ledit écran (ECR) possède au moins une des caractéristiques suivantes :
- coefficient de perméabilité à la vapeur d'eau inférieur à 6 000 g/m²/24h,
- résistance à la déchirure au clou supérieure à 50 Newtons,
- réflexion de l'énergie comprise entre 50 et 75%.

8. Module selon l'une quelconque des revendications précédentes, **caractérisé en ce que** lesdits moyens d'isolation (CITP) et d'étanchéité (ECR) sont assemblés par collage.

9. Module selon la revendication 8, **caractérisé en ce que** ledit collage se présente sous forme de cordons de colle (CC1, CC2, CC3) parallèles.

10. Module selon la revendication 9, **caractérisé en ce que** ledit écran (ECR) présente un débord (DEB) par rapport à au moins un bord desdits moyens d'isolation (CITP).

11. Module selon la revendication 10, **caractérisé en ce que** lesdits cordons de colle (CC1, CC2, CC3) présentent un retrait par rapport à au moins un bord desdits moyens d'isolation (CITP), la longueur dudit retrait étant supérieure ou égale à celle dudit débord (DEB).

## Claims

1. A module (MIE) for coating a wall, the module comprising insulation means (CITP) assembled with sealing means (ECR), and being **characterized in that** said insulation means (CITP) comprise an insulation laminate made up of alternating sheets and films, the laminate being free from compression points.

2. A module according to claim 1, **characterized in that** said sealing means (ECR) consist in a screen made up of at least one layer of metal-plated non-woven material.

3. A module according to claim 2, **characterized in that** said non-woven material is polyethylene.

4. A module according to claim 2, **characterized in that** said non-woven material is polyester.

5. A module according to claim 2, **characterized in that** said non-woven material is polypropylene and **in that** said screen (ECR) includes at least two layers.

6. A module according to any one of claims 2 to 5, **characterized in that** said screen (ECR) presents resistance to penetration by water that is greater than 1000 mm and less than 3000 mm.

7. A module according to any one of claims 2 to 6, **characterized in that** said screen (ECR) possesses at least one of the following characteristics:
· a water vapor permeability coefficient of less than 6000 g/m²/24 h;
· nail tear strength greater than 50 newtons; and
· energy reflection lying in the range 50% to 75%.

8. A module according to any preceding claim, **characterized in that** said insulation means (CITP) and sealing means (ECR) are assembled together by adhesive.

9. A module according to claim 8, **characterized in that** said adhesive is in the form of parallel beads of adhesive (CC1, CC2, CC3).

10. A module according to claim 9, **characterized in that** said screen (ECR) presents a margin (DEB) relative to at least one edge of said insulation means (CITP).

11. A module according to claim 10, **characterized in that** said beads of adhesive (CC1, CC2, CC3) are set back relative to at least one edge of said insulation means (CITP), the length of said setback being greater than or equal to the length of said margin (DEB).

## Patentansprüche

1. Modul (MIE) zur Verkleidung einer Wand, das Isoliereinrichtungen (CITP) enthält, die mit Abdichteinrichtungen (ECR) zusammengefügt sind, **dadurch gekennzeichnet, dass** die Isoliereinrichtungen (CITP) aus einem Isolierkomplex bestehen, der aus einer Wechselfolge von Lagen und Folien zusammengesetzt ist, wobei dieser Komplex keine Druckpunkte aufweist.

2. Modul nach Anspruch 1, **dadurch gekennzeichnet, dass** die Abdichteinrichtungen (ECR) aus einer Abschirmung bestehen, die aus mindestens einer Schicht aus metallisiertem Vliesstoff zusammengesetzt ist.

3. Modul nach Anspruch 2, **dadurch gekennzeichnet, dass** der Vliesstoff Polyethylen ist.

4. Modul nach Anspruch 2, **dadurch gekennzeichnet, dass** der Vliesstoff Polyester ist.

5. Modul nach Anspruch 2, **dadurch gekennzeichnet, dass** der Vliesstoff Polypropylen ist, und dass die Abschirmung (ECR) mindestens zwei Schichten aufweist.

6. Modul nach einem der Ansprüche 2 bis 5, **dadurch gekennzeichnet, dass** die Abschirmung (ECR) eine Festigkeit gegenüber dem Eindringen von Wasser aufweist, die höher als 1000 mm und niedriger als 3000 mm ist.

7. Modul nach einem der Ansprüche 2 bis 6, **dadurch gekennzeichnet, dass** die Abschirmung (ECR) mindestens eines der folgenden Merkmale aufweist:
- Wasserdampfdurchlässigkeitskoeffizient niedriger als 6000 g/m²/24h,
- Weiterreißfestigkeit höher als 50 Newton,
- Reflexion der Energie zwischen 50 und 75%.

8. Modul nach einem der vorhergehenden Ansprüche, **dadurch gekennzeichnet, dass** die Isolier- (CITP) und Abdichteinrichtungen (ECR) durch Verklebung zusammengefügt werden.

9. Modul nach Anspruch 8, **dadurch gekennzeichnet, dass** die Verklebung in Form von parallelen Klebstoffstreifen (CC1, CC2, CC3) vorliegt.

10. Modul nach Anspruch 9, **dadurch gekennzeichnet, dass** die Abschirmung (ECR) einen Überstand (DEB) bezüglich mindestens eines Rands der Isoliereinrichtungen (CITP) aufweist.

11. Modul nach Anspruch 10, **dadurch gekennzeichnet, dass** die Klebstoffstreifen (CC1, CC2, CC3) einen Rücksprung bezüglich mindestens eines Rands der Isoliereinrichtungen (CITP) aufweisen, wobei die Länge des Rücksprungs größer als die oder gleich derjenigen des Überstands (DES) ist.
